# EUROPÄISCHE PATENTANMELDUNG

(11) **EP 4 825 810 A1**
(43) Veröffentlichungstag der Anmeldung: **21.10.2026**
(21) Anmeldenummer: 26172412.4
(22) Anmeldetag: 15.04.2026
(51) Int. Cl.: C02F 1/00, C02F 1/50, B01D 29/46, B01D 29/58, B01D 35/02

(54) **TRINKWASSERFILTER**

(30) Priorität: 15.04.2025 DE 102025114658
(71) Anmelder: SLG Kunststoff GmbH, 79872 Bernau (Unterlehen) (DE)
(72) Erfinder: Fuchs, Karl-Heinz, 78315 Radolfzell (DE)
(74) Vertreter: Patentanwälte und Rechtsanwalt Weiß, Arat & Partner mbB

(57) **Zusammenfassung**

Bei einem Trinkwasserfilter mit einem Trinkwasser-Mikroplastikfilter (1, 1.1, 1.2) und einem Gehäuse, wobei das Gehäuse aus einem Kopfgehäuse (2) und einem Aufnahmegehäuse (7) besteht, wobei das Kopfgehäuse (2) einen Zulauf-Gewindestutzen (3) aufweist und einen Ablauf-Gewindestutzen (4) ausbildet, wobei der Zulauf-Gewindestutzen (3) ein winkliges Zu- und Ablaufrohr (13) aufweist, wobei ein Zulaufstutzen (18) des Zu- und Ablaufrohrs (13) sich einends zu dem Zulauf-Gewindestutzen (3) erstreckt und andernends abgewinkelt zu dem Zulaufstutzen (18) ein Rohrkörper vorhanden ist, wobei der Rohrkörper auf dem vom Zulauf-Gewindestutzen (3) abgewandten Ende eine Lochung (14) im Endbereich aufweist und in eine abschliessende Rohröffnung (15) aufweist, soll in dem Aufnahmegehäuse (7) ein Filtermodul (10) angeordnet sein, wobei das Filtermodul (10) aus mindestens zwei Filterscheiben (9.1, 9.2, 9.3) besteht, wobei die Filterscheiben (9.1, 9.2, 9.3, 9.5) aus einer gewickelten Polypropylenrundschnur (26) bestehen, wobei das Filtermodul (10) die Wasserfilterung über Planflächen (16) der Filterscheiben (9.1, 9.2, 9.3) und über innere Stirnfläche (39) der Filterscheiben (9.1, 9.2, 9.3), die zu dem Rohrkörper hin angeordnet sind, erfolgt, wobei die Wasserfilterung von einends an dem Filtermodul (10) in einem Bereich eines Anschlags (11) befindlichen Wasserdurchbrüchen (22) zu dem andernends des Filtermoduls (10) befindlichen Zulaufstutzen (18) geführt ist.

## Beschreibung

### Technisches Gebiet

Die Erfindung betrifft ein Trinkwasserfilter nach dem Oberbegriff des Anspruchs 1.

### Stand der Technik

Die Abwasserkläranlagen filtern nach heutigem Stand zum Beispiel über die Filterverfahren: Elektrokoagulation, Flotation, Membranfiltration, Ozonierung und Oxidation sowie über biologische Verfahren nur bis zu 80 % der Mikroplastikpartikel ab einer Partikelgröße von ca. 50µm und größer aus dem Abwasser.

Mikroplastikpartikel im Bereich unter 50µm und insbesondere Partikelgrößen von ca. 3µm bis 5µm können nicht durch die bekannten Filterverfahren aufgefangen und entsorgt werden, d. h. dass zum Beispiel ca. 5µm große Kunststoffpartikel ins Grundwasser, in die Flüsse und Meere gelangen und dadurch natürlich auch im Trinkwasser vorhanden sind, welches Menschen und Tiere jeden Tag über die Nahrung aufnehmen, so dass sich die Kunststoffpartikel in den menschlichen und tierischen Körpern ansammeln und zu Krankheiten führen.

Die Mikroplastikpartikel werden zum großen Teil in den Waschmaschinen für Textilien durch Abrieb der Wäsche erzeugt.

Mikroplastikpartikel, die durch das Waschen von Textilien entstehen, insbesondere durch den Abrieb von synthetischen Fasern wie Polyester, Nylon, oder Acryl, sind typischerweise sehr klein.

Die meisten Studien zeigen, dass die Fasern häufig zwischen 3µm und 5µm bzw. ein paar 100 µm lang und oft nur wenige Mikrometer dick sind.

Da sie so klein sind, können diese Kunststofffasern leicht ins Abwasser gelangen und durch herkömmliche Kläranlagen nur schwer bzw. nicht vollständig entfernt werden können.

Ebenfalls ein Großteil der Mikroplastikpartikel kommt aus kosmetischen Produkten und von Plastikprodukten, die das Abwasser belasten und nur sehr schwer bzw. im 5 µm Bereich nicht mit den bekannten Abwasserfilterverfahren aufsammelbar und entsorgbar sind.

Um das Frischwasser bzw. Trinkwasser für und im Haushalt für den Nutzer sedimentfrei zu bekommen, gibt es Sedimentfilter, welche hinter dem Hauswasserzähler installiert werden können.

Derartige Filtersysteme sind bereits in vielfältiger Form und Ausgestaltung bekannt, sie filtern Partikelgrößen im Bereich über ca. 50µm aus dem Leitungswasser.

Für Sediment- und Mikroplastikpartikeln im Bereich von ca. 5µm Partikelgröße wird mit den bekannten Filtereinsätzen, ausgebildet als hohlzylindrische Rolle und aufgebaut als Vliesfaltfilter, vliesgewickelte- oder kompakte Vliesfilterpatronen, das Gebrauchswasser über die äußere Zylinderfläche und über die Zylinderwandung Richtung inneren Hohlraum der hohlzylindrischen Rolle strömen, um dadurch das Wasser zu filtern, aber keine bzw. nur sehr bedingt 5 µm große Feststoffe auffängt und zur Entsorgung bereitstellt.

Aus dem Stand der Technik sind derartige Trinkwasserfilter bereits in vielfältiger Form und Ausgestaltung bekannt und gebräuchlich. So wird beispielsweise in der DE 20 2019 104 963 U1 ein Trinkwasserfilter offenbart, der eine Anschlussarmatur mit einem Einlass und einem Auslass zur Installation unmittelbar vor einer Zapfstelle aufweist, wobei eine an der Anschlussarmatur vorgesehene Filtertasse vorhanden ist, wobei wenigstens zwei hintereinander geschaltete Filterstufen aus Filtermaterialien, die im Strömungsweg zwischen Einlass und Auslass in der Filtertasse angeordnet sind, wobei eine der Filterstufen von einem Aktivkohlefilter gebildet ist, wobei ein Ablauf am unteren Ende der Filtertasse vorgesehen ist und wenigstens eine der Filterstufen als Rückspülfilterstufe ausgebildet ist, welcher von einer Betriebsstellung, bei welcher Wasser vom Einlass durch alle Filterstufen zum Auslass geleitet wird, zum Rückspülen in eine Rückspülstellung umschaltbar ist, bei welcher Wasser vom Einlass in umgekehrter Richtung durch die Rückspülfilterstufe zu dem geöffneten Ablauf leitbar ist.

Weiter wird auf die WO 2021/116797 A1 hingewiesen. Dort wird eine Vorrichtung zum Reinigen und Sammeln von Mikroplastik in einer aquatischen Umgebung offenbart, wobei die Vorrichtung eine Reinigungskammer aufweist, durch die Wasser fließt, das das Mikroplastik enthält, wobei ein Wandler vorhanden ist, der so konfiguriert ist, dass er Mikroblasen einer Größe erzeugt, die bewirkt, dass die Mikroblasen durch die Reinigungskammer strömendes Mikroplastik reinigen, wobei zusätzlich eine Filterkammer vorhanden ist, die sich oberhalb der Reinigungskammer befindet, wobei die Filterkammer eine Mikroplastiksammeleinheit aufweist, die zum Sammeln des Mikroplastiks betreibbar ist.

### Aufgabe der Erfindung

Die Aufgabe der vorliegenden Erfindung ist es, die Nachteile aus dem Stand der Technik zu überwinden.

Insbesondere soll ein Trinkwasserfilter zur Verfügung gestellt werden, welcher Mikroplastikpartikel im Bereich von ca. 3µm bis 5µm und größere Kunststoffpartikel aus dem Gebrauchs- und Trinkwasser ausfiltern kann, wobei der Trinkwasserfilter die ausgefilterten Mikroplastikpartikel zusätzlich zur Entsorgung bereitstellen soll und zwar mit der Voraussetzung, dass die Mikroplastikfiltersysteme im Hauswasserverbrauchsbereich funktionstüchtig und fachmännisch installiert werden können.

### Lösung der Aufgabe

Zur Lösung der Aufgabe führen die Merkmale nach dem Anspruch 1.

Vorteilhafte Ausgestaltungen sind in den Unteransprüchen beschrieben.

Der Trinkwasserfilter mit einem integrierten Trinkwasser-Mikroplastikfilter ist für den stationären Einbau in Hauswasserleitungen konzipiert und dient der gezielten Entfernung von Mikroplastikpartikeln und anderen Sedimenten aus dem Leitungswasser. Das Filtersystem ist als Hohlzylinder gestaltet, dessen äußere Hülle aus einem zweiteiligen Gehäuse besteht. Dieses setzt sich aus einem oberen Kopfgehäuse und einem daran anschließenden Aufnahmegehäuse zusammen. Das Kopfgehäuse ist mit einem Zulauf-Gewindestutzen als Wassereinlass und einem gegenüberliegenden Ablauf-Gewindestutzen als Wasserauslass ausgestattet. Das Aufnahmegehäuse ist vorzugsweise glasklar oder transluzent und wird über ein Adaptionsgewinde mit Dichtung fest mit dem Kopfgehäuse verschraubt. Eine integrierte Ab- und Aufschraubhilfe erleichtert die Handhabung beim Öffnen und Schließen des Gehäuses, insbesondere beim Wechsel des Filtermoduls.

Im Zentrum des Systems befindet sich das funktionale Herzstück - ein kompaktes Filtermodul. Dieses besteht aus mehreren hintereinander angeordneten Filterscheiben, die aus einer speziellen Polypropylenrundschnur gefertigt sind. Die Herstellung dieser Scheiben erfolgt durch ein computergesteuertes Wickelverfahren, bei dem die Schnur asymmetrisch und unregelmäßig um einen zylindrischen Dorn gewickelt wird. Die Dichte und Struktur der Wicklung bestimmt den Porendurchmesser der jeweiligen Filterscheibe. Auf diese Weise lassen sich Durchlassweiten im Bereich von drei bis fünfzig Mikrometern realisieren, wobei der Filter je nach Einsatzort entsprechend konfiguriert werden kann. Die Filterscheiben werden über ihre zentrale Bohrung auf ein winklig ausgeführtes Zu- und Ablaufrohr aufgefädelt. Dieses Rohr verfügt über einen waagerechten Zulaufstutzen, der in einem rechten Winkel in ein senkrecht verlaufendes Rohrstück übergeht. Der Zulaufstutzen ist so gestaltet, dass er mit seiner plan ausgeführten Stirnfläche lose gegen die Innenwand des Kopfgehäuses liegt und dort an der Zulaufbohrung anliegt. Die Verbindung zum Kopfgehäuse erfolgt über eine lose steckbare Vierkantrippe, die eine sichere Positionierung ohne Verdrehen gewährleistet.

Der senkrechte Abschnitt des Zu- und Ablaufrohrs weist im unteren Bereich eine definierte Lochung auf. Diese Perforation erlaubt es dem zuströmenden Wasser, nicht nur durch die untere Rohröffnung auszutreten und die Planfläche der untersten Filterscheibe zu beaufschlagen, sondern zugleich auch seitlich in die inneren Stirnflächen der darüberliegenden Filterscheiben einzudringen. Dadurch wird eine umfassende Durchströmung jeder Filterschicht gewährleistet. Das Wasser strömt dabei stets von der großporigen zur feinporigen Filterscheibe, also von unten nach oben. Diese sequenzielle Anordnung der Filterschichten maximiert die Trennwirkung und gewährleistet, dass Partikel nach Größe gestaffelt zurückgehalten werden. Auf diese Weise wird eine hocheffiziente Filterung auch kleinster Mikroplastikpartikel erreicht.

Der Aufbau des Filtermoduls folgt einer klaren technischen Logik: Die erste Filterscheibe ist mit einem Porendurchmesser von fünfzig Mikrometern ausgestattet und befindet sich im unteren Bereich. Darauf folgt eine zweite Filterscheibe mit fünfundzwanzig Mikrometern, eine weitere mit zehn Mikrometern und schließlich eine letzte mit fünf Mikrometern. Jede Scheibe übernimmt eine spezifische Filterstufe im Prozess und ist darauf ausgelegt, den jeweiligen Partikeldurchmesser effizient zurückzuhalten. Die Anordnung dieser Filterstufen gewährleistet eine stufenweise Reduktion der Partikelgröße und verhindert gleichzeitig ein schnelles Verstopfen der feineren Filterscheiben. Ein zusätzlicher Vorteil dieses gestaffelten Aufbaus besteht darin, dass der Wasserdruck optimal genutzt wird, da sich der Strömungswiderstand nicht auf einen einzigen Filterschritt konzentriert, sondern über die gesamte Filterstrecke verteilt.

Optional kann das Filtermodul mit einer antibakteriellen Filterscheibe ausgestattet werden, die aus schmelzgeblasenem Polypropylen besteht und mit einer Nanosilberbeschichtung versehen ist. Diese Scheibe erfüllt nicht die Funktion der Mikroplastikfilterung, sondern ist gezielt für die Reduktion mikrobiologischer Belastungen konzipiert. Das Nanosilber hemmt das Wachstum von Bakterien, Schimmelpilzen und anderen Mikroorganismen, wodurch sich der Einsatz dieser Filterscheibe insbesondere für medizinische oder labortechnische Anwendungen empfiehlt. Im privaten Haushalt kann sie als zusätzliche Schutzstufe verwendet werden, ist jedoch nicht zwingend erforderlich.

Das Filtermodul ist im unteren Bereich über einen Scheibenaufnahmekorb mit dem Zu- und Ablaufrohr fest verbunden. Diese Verbindung erfolgt über eine Schnappmechanik, die eine stabile, aber lösbare Fixierung der Filterscheiben erlaubt. Die gesamte Einheit ist so konstruiert, dass sie bei Verschmutzung oder Verstopfung der Filterscheiben einfach entnommen und ausgetauscht werden kann. Der Zugang zum Filtermodul erfolgt durch das Abschrauben des Aufnahmegehäuses. Der Austauschprozess ist einfach und benutzerfreundlich gestaltet und kann ohne Spezialwerkzeug durchgeführt werden. Für besonders flexible Anwendungen ist auch eine Variante vorgesehen, bei der die Filterscheiben einzeln entnommen und in beliebiger Reihenfolge wieder eingesetzt werden können.

Ein weiterer zentraler Aspekt des Filtersystems ist die Möglichkeit der Rückspülung. Hierzu ist ein Drehschieber auf der Mittelachse des Kopfgehäuses montiert, der mit dem Zu- und Ablaufrohr gekoppelt ist. Durch Drehen dieses Schiebers kann die Strömungsrichtung des Wassers umgekehrt werden, sodass der Wasserstrom nicht mehr von unten nach oben, sondern von oben nach unten durch die Filterscheiben geführt wird. Diese Rückspülung löst angesammelte Mikroplastikpartikel aus den Poren der Filterscheiben und spült sie in Richtung eines Wasserablassventils am unteren Ende des Aufnahmegehäuses aus dem System. Um eine Umweltbelastung durch ausgespülte Partikel zu vermeiden, kann das austretende Wasser durch eine Folie mit fünf Mikrometern Porendurchmesser geleitet werden, die die Mikroplastikpartikel auffängt und deren gezielte Entsorgung ermöglicht.

Der Druckverlauf im System wird über das bereits erwähnte Druckmanometer im Kopfgehäuse überwacht. Sinkt der Systemdruck unter einen definierten Wert, zeigt dies eine zunehmende Verstopfung der Filterscheiben an. Dies löst entweder eine visuelle Anzeige, ein akustisches Signal oder eine digitale Benachrichtigung aus, die den Benutzer zum Wechsel des Filtermoduls auffordert. Diese kontinuierliche Überwachung stellt sicher, dass die Filtrationsleistung jederzeit gewährleistet bleibt und der Austauschbedarf rechtzeitig erkannt wird.

Neben der Standardausführung sind auch kompaktere Varianten des Trinkwasser-Mikroplastikfilters erhältlich, die sich für den Einsatz an einzelnen Wasserentnahmestellen eignen. Eine solche Ausführung ist besonders für die Küche vorgesehen, wo der Wasserverbrauch konzentriert stattfindet. Hier kann eine reduzierte Anzahl an Filterscheiben eingesetzt werden, etwa nur eine grobe und eine feine, um dennoch eine effektive Mikroplastikfilterung zu gewährleisten. Aufgrund der geringeren Filterfläche muss das Filtermodul bei diesen Ausführungen in kürzeren Intervallen gewechselt werden. Besonders platzsparende Versionen ermöglichen sogar die direkte Montage am Perlator einer Wasserarmatur. Auch hier folgt das Funktionsprinzip der gewickelten Filterscheiben dem modularen Aufbau des Hauptsystems. Der Wasserstrom tritt direkt von oben durch die Filterscheiben ein und verlässt das System gefiltert über den Perlator. Die Wartung erfolgt ebenfalls durch Abschrauben des Aufnahmegehäuses, wobei das komplette Filtermodul ausgetauscht wird.

In allen Ausführungen zeigt sich die große Stärke des Systems in seiner modularen Bauweise, der durchdachten Strömungsführung und der gezielten Nutzung von Druckverhältnissen zur Erzielung einer höchstmöglichen Filtrationsleistung. Die Kombination aus feiner mechanischer Filterung, optionaler antibakterieller Funktion und Rückspülbarkeit macht das System zu einer vielseitig einsetzbaren Lösung zur Trinkwasseraufbereitung im häuslichen wie auch im professionellen Umfeld.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: einen Querschnitt des erfindungsgemäßen als runder Hohlzylinder ausgebildeter Trinkwasser-Mikroplastikfilter;
- Figur 2: einen Querschnitt durch das kompakte Filtermodul des erfindungsgemäßen Trinkwasser-Mikroplastikfilters;
- Figur 3: eine Hauptansicht von dem kompakten Filtermodul des erfindungsgemäßen Trinkwasser-Mikroplastikfilters;
- Figur 4: einen Querschnitt durch die Filterscheibe des erfindungsgemäßen Trinkwasser-Mikroplastikfilters;
- Figur 5: eine Ansicht der Filterscheibe des erfindungsgemäßen Trinkwasser-Mikroplastikfilters;
- Figur 6: einen Querschnitt durch den erfindungsgemäßen Trinkwasser - Mikroplastikfilter, als Ausführungsbeispiel mit Filterrückspülung der Filterscheiben;
- Figur 7: einen Querschnitt durch den erfindungsgemäßen Trinkwasser - Mikroplastikfilter als Ausführungsbeispiel mit Filterrückspülung der Filterscheiben, dargestellt in der Funktion und Position während der Filterscheibenrückspülung mit geöffnetem Wasserablassventil;
- Figur 8: eine Ansicht der Hauswasserleitung von Wasserzähler bis zur Wasserentnahmearmatur;
- Figur 9: einen Querschnitt durch ein Ausführungsbeispiel des erfindungsgemäßen Trinkwasser-Mikroplastikfilter in reduzierter Bauweise;
- Figur 10: einen Querschnitt durch das kompakte Filtermodul des erfindungsgemäßen Trinkwasser-Mikroplastikfilters in reduzierter Bauweise;
- Figur 11: einen Querschnitt durch den kompakten erfindungsgemäßen Trinkwasser-Mikroplastikfilter, ausgebildet als Aufschraubfiltereinheit.

### Ausführungsbeispiel

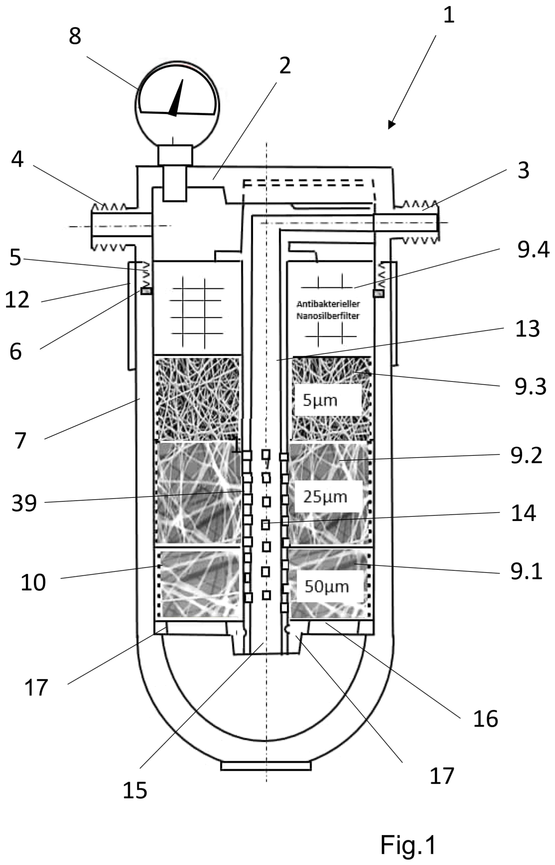

Figur 1 zeigt einen Querschnitt des erfindungsgemäßen als runder Hohlzylinder ausgebildeter Trinkwasser-Mikroplastikfilter 1.

Der obere Zylinderabschluss wird mit einem Kopfgehäuse 2 abgedeckt, welches den Zulaufgewindestutzen 3 als Wasserzulauf und gegenüber den Ablaufgewindestutzen 4 als Wasserablauf, ausgebildet an der Außenwand des Kopfgehäuses 2 mit den Wasserdurchlässen, angeordnet ist.

An der Kopfgehäuseöffnung ist das Adaptionsgewinde 5 mit der Verschraubdichtung 6 für das glasklare bzw. transluzente Aufnahmegehäuse 7 mit der Ab- bzw. Aufschraubhilfe 12 im oberen Verschraub- und Öffnungsbereich an der Außenwand angeordnet.

In der Kopfwandung des Kopfgehäuses 2 ist die Aufnahme für einen Druckmanometer 8 integriert, um den Systeminnendruck zu überwachen und beim Absinken des konstanten Wasserdruckes visuell oder über ein Lichtzeichen bzw. Tonzeichen Alarm auszulösen, so dass die Filterscheiben 9.1,9.2,9.3,9.4 ausgewechselt werden sollten, da sie durch den aufgefangenen Partikelschmutz und Mikroplastikpartikel zugesetzt sind, dadurch der Wasserdurchfluss gehemmt ist mit dem Resultat, dass der Druck im System sinkt.

Der Druckimpuls, ausgelöst vom Druckmanometer 8, kann auch direkt auf eine App weitergeleitet werden, so dass der Benutzer über die App auf dem Handy die Informationen bzw. Status seines eingebauten Mikroplastikfilters direkt übermittelt bekommt.

Das Systemherz besteht aus einem kompakten Filtermodul 10, welches zentral im Aufnahmegehäuse 7 gelagert und gegen Verdrehen im Kopfgehäuse 2 über eine Vierkantrippe lose und steckbar verbunden ist, um über einen Anschlag 11 im unteren Innenwandbereich des Aufnahmegehäuses 7 angeordnet und somit gegen eine Längsverschiebung gesichert und fixiert ist.

Die zentrale Achse des kompakten Filtermoduls 10 bildet ein winkliges Zu- und Ablaufrohr 13 mit einem Zulaufstutzen 18 und mit der im unteren Bereich angeordneten Lochung 14, damit der Wasserfluss nicht nur über die untere Rohröffnung 15 gegen die Planfläche 16 der untersten Filterscheibe 9.1 aufläuft, sondern auch bei den zwei Filterscheiben 9.1 und 9.2 die innenliegenden Filterscheibenstirnseiten 39 stirnseitig durchströmt, um mit dem gesamten Wasserdruck und der Wassermenge die Filterscheibe 9.3, ausgebildet mit 5µm Poren, zu beaufschlagen und zu durchströmen.

Je nach Einsatzort des Mikroplastikfilters kann auch eine antibakterielle mit Nanosilber behandelte Filterscheibe 9.4 zum Einsatz kommen.

Um die Filterscheiben 9.1,9.2,9.3,9.4 auf dem zentralen Zu- bzw. Ablaufrohr zu fixieren, ist am unteren Rohrende ein Scheibenaufnahmekorb 17 unlösbar mit dem Zu- bzw. Ablaufrohr 13 über eine Verschnappung verankert, so dass bei zugesetzten Filterscheiben 9 das gesamte Filtermodul 10 gewechselt werden muss.

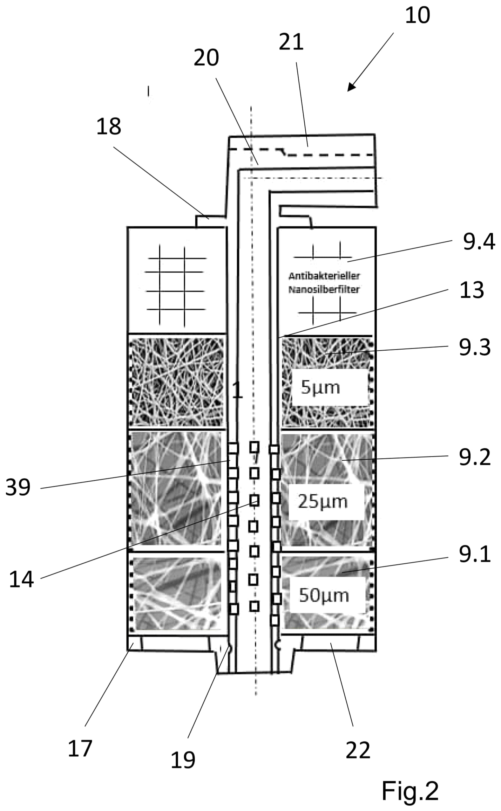

Figur 2 zeigt einen Querschnitt durch das kompakte Filtermodul 10 des erfindungsgemäßen Trinkwasser-Mikroplastikfilters 1.

Auf dem zentralen winkligen Zu- bzw. Ablaufrohr 13 sind die Filterscheiben 9.1, 9.2, 9.3, 9.4 aufgefädelt und durch den im unteren Rohrbereich angeordneten Scheibenaufnahmekorb 17 mit den Wasserdurchbrüchen 22 gegen die gegenüberliegende integrierte Anschlagscheibe 18 fixiert und gegen eine Längsverschiebung gesichert.

Durch das unlösbare Verankern des Scheibenaufnahmekorbes 17 mit dem Zu- bzw. Ablaufrohr 13 über eine innenliegende Schnappverbindung 19 wird ein kompaktes Filtermodul und eine Einheit geschaffen, um eine optimale Wasserfilterung durch die aufgefädelten Filterscheiben 9.1, 9.2, 9.3, 9.4 und einfache benutzerfreundliche Handhabung bei der Modulauswechslung zu erreichen.

Im oberen Zu- und Ablaufrohrbereich 13 ist der Zulaufstutzen 20 im 90° Winkel zum senkrecht verlaufenden Rohrteil einstückig angeordnet und kopfseitig mit einer Vierkantrippe 21 als Verdrehsicherung für das Zu- bzw. Ablaufrohr 13 mit dem Zulaufstutzen 20 ausgebildet.

Das senkrechte Rohrteil besitzt in der unteren Hälfte eine umlaufende Lochung, Perforierung 14, ausgebildet als Wasserdurchlässe, um den Wasserstrom auch seitwärts in die inneren Stirnseiten 39 der Filterscheiben zu leiten.

Die aufgefädelten hintereinander sitzenden Filterscheiben 9.1, 9.2, 9.3, 9.4 werden von unten nach oben mit dem zu filternden Wasser durchströmt, wobei die unterste Scheibe 9.1 die größten Porendurchmesser besitzt und die Porendurchmesser nach oben der aufgereihten Filterscheiben abnehmen bis die gewünschten Porendurchmesser von 5µm mit der Filterscheibe 9.3 erreicht werden, d. h. die unterste Scheibe hat zum Beispiel Porendurchlässe von 50µm, die nächste Filterscheibe 9.2 einen Porendurchlass von 25µm und die letzte Filterscheibe 9.3 in dem vorliegenden Beispiel den Porendurchmesser von 5µm.

Die im beschriebenen Beispiel über der Filterscheibe 9.3 liegende Scheibe 9.4 ist eine antibakterielle mit Nanosilber behandelte schmelzgeblasene Polypropylen Filterscheibe.

Die Nitratsilberschicht hemmt das Wachstum von Bakterien, Pilzen, Schimmel und Mehltau und beseitigt Bakterien, Schimmel usw.

Diese Filterscheibe 9.4 muss für die Mikroplastikfilterung nicht integriert sein, da sie ausschließlich als antibakterielles Bauteil konzipiert ist und zusätzlich in Kliniken, Labors zum Einsatz kommen wird.

Die Herstellung der Filterscheiben 9.1, 9.2, 9.3 erfolgt über ein Wickelverfahren, wobei eine dünne Polypropylenrundschnur auf einen Dorn asymmetrisch und atypisch, also unregelmäßig und kreuz und quer gesteuert über eine Software und Computerprogramm je nach gewünschtem Porendurchmesser grob oder eng mit kontinuierlich einstellbarem Wicklungsabstand aufgewickelt wird.

Mit diesem Wickelverfahren können Porendurchmesser genau festgelegt und eingestellt werden, um für jede Filterscheibe je nach Anforderung die richtigen Porendurchmesser bzw. Wasserdurchlässe zu erzielen.

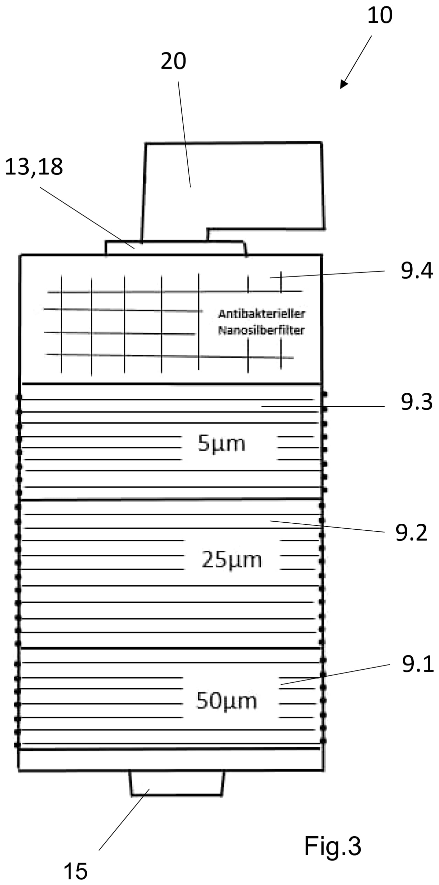

Figur 3 zeigt eine Hauptansicht von dem kompakten Filtermodul 10 des erfindungsgemäßen Trinkwasser-Mikroplastikfilters 1, mit den aufgefädelten, aufgereihten Filterscheiben mit 50µm 9.1, der Filterscheibe mit 25µm 9.2, der Filterscheibe mit 5µm 9.3 und der antibakteriellen Nanosilberscheibe 9.4 sowie den Wasserzulaufstutzen 20 als Teil des Zu- und Ablaufrohres 13 und den Scheibenaufnahmekorb 17 unter der Filterscheibe 9.1.

Als äußere Filterscheibenwicklung und Abschluss des Wickelvorganges der Filterscheiben 9.1,9.2,9.3 ist ein regelmäßiger umlaufender Schnurverlauf dargestellt. Die Scheibe 9.4 wird mit einer Gitterstruktur dargestellt.

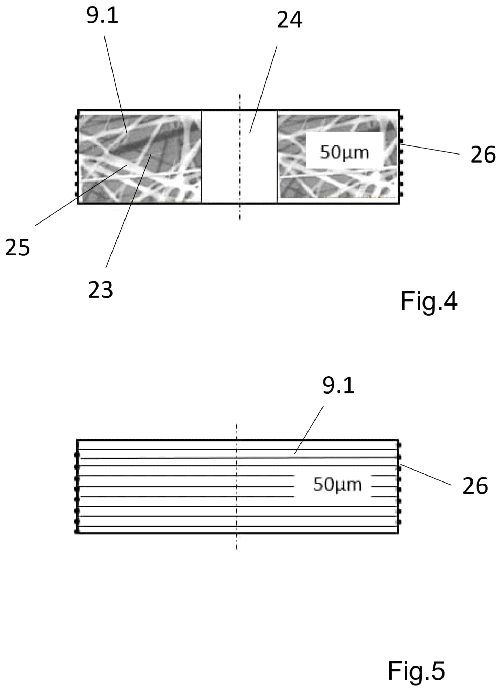

Figur 4 zeigt einen Querschnitt durch die Filterscheibe 9.1 des erfindungsgemäßen Trinkwasser-Mikroplastikfilters 1.

Durch die Wickelstruktur 23, welche mit einer Polypropylenrundschnur 26 durch eine asymmetrische, unregelmäßige sowie kreuz und quer über eine Software und Computerprogramm je nach Anforderungen grob oder enger durch das Aufwickeln der Schnur auf einen Dorndurchmesser 24 erzeugt wird, gibt es größere oder kleinere Porendurchmesser 25, so dass Porengrößen bis 5µm erreicht werden und somit für kleinste Mikroplastikpartikel geeignet sind, um sie aus dem Trinkwasser herauszufiltern.

Figur 5 zeigt eine Ansicht der Filterscheibe 9.1 des erfindungsgemäßen Trinkwasser - Mikroplastikfilters 1.

Bei dieser Darstellung wurde die aufgewickelt Polypropylenrundschnur 26 bei dem letzten Wicklungsumlauf gleichmäßig aufgewickelt, um die Rundschnur sichtbar sowie den Wicklungsablauf sichtbar zu machen.

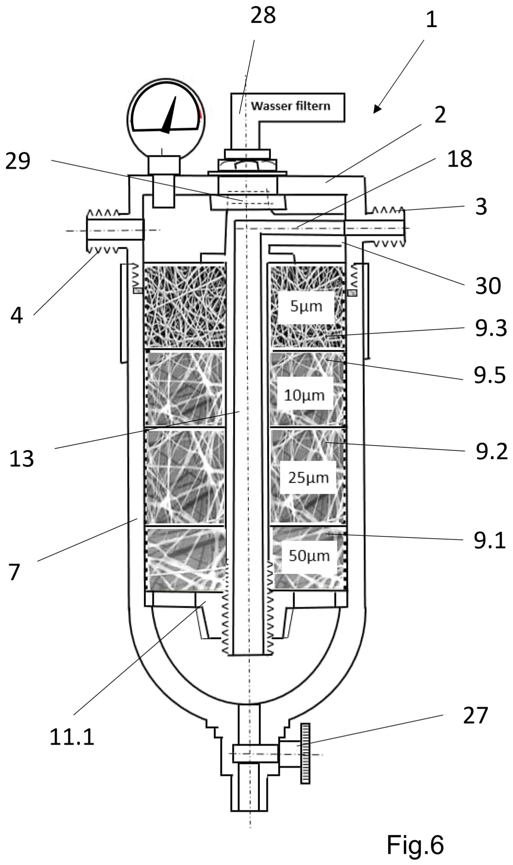

Figur 6 zeigt einen Querschnitt durch den erfindungsgemäßen Trinkwasser - Mikroplastikfilter 1, als Ausführungsbeispiel mit Filterrückspülung der Filterscheiben 9.1, 9.2,9.3,9.5, dargestellt in der Funktion und Position während der Wasserfilterung mit geschlossenem Ablaufventil 27.

Der aufgesetzte Drehschieber 28, angeordnet auf der Mittelachse des Systems sowie auf der oberen Außenfläche des Kopfgehäuses 2 und mit dem Zulauf- und Ablaufrohr 13 direkt am Zulaufstutzen 18 über eine steckbare vierkant Mitnahmegeometrie 29 lose verbunden, kann manuell um 180° gedreht werden.

Durch das Drehen des Drehschiebers 28 aus der Wasserfilterposition in die Wasserfilterspülposition wird über die Mitnahmegeometrie 29 das Zulauf- und Ablaufrohr 13 mit dem Zulaufstutzen 18 ebenfalls um 180° gedreht, so dass die plane, sich der Innenrundung des Kopfgehäuses 2 angepasste tuschierende Stirnfläche 30 des Zulaufstutzens 18 sich von der Zulaufbohrung am Wasserzulaufgewindestutzen 3 löst und zur Ablaufbohrung am Wasserablaufgewindestutzen 4 dreht, somit wird der Wasserstrom umgeleitet, damit die Filterscheiben rückwärts vom durchströmenden Wasser beaufschlagt werden.

Bei dieser Ausführung ist ein ab- und aufschraubbarer Filterscheibenaufnahmekorb 11.1 integriert, um dem Benutzer die Möglichkeit zu offerieren, die Filterscheiben einzeln auszuwechseln und die Filterscheiben je nach gewünschter Anordnung und Porendurchmesser entsprechend der Anforderung auch in der gewünschten Reihenfolge auf dem Zu- bzw. Ablaufrohr 13 zu positionieren.

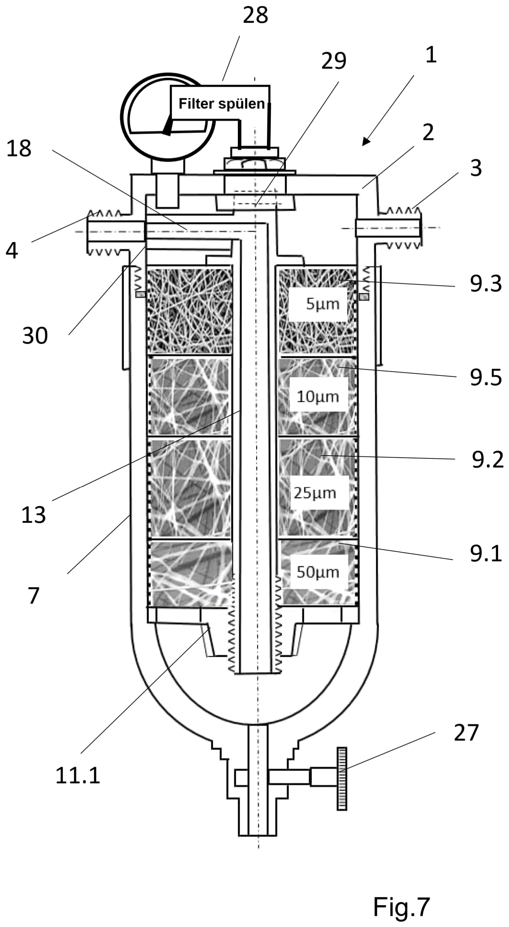

Figur 7 zeigt einen Querschnitt durch den erfindungsgemäßen Trinkwasser - Mikroplastikfilter 1 als Ausführungsbeispiel mit Filterrückspülung der Filterscheiben 9.1,9.2,9.3,9.4, dargestellt in der Funktion und Position während der Filterscheibenrückspülung mit geöffnetem Wasserablassventil 27.

Wenn der Drehschieber 28 auf der Position "Filter spülen" steht und das Wasserablaufventil 27 offen ist, läuft das zuströmende Wasser direkt auf die Planfläche der Filterscheibenrückseite, dargestellt mit dem kleinsten Porendurchmesser 5µm der Filterscheiben 9.3.

Durch das Beaufschlagen des Wasserstroms auf die Filterscheibenplanflächen der Filterscheiben werden die angesammelten Mikroplastikpartikel aus den zugesetzten Poren der aufgefädelten Filterscheiben durch den Wasserstrom, welcher den Schmutz vor sich her in den unteren Teil des Aufnahmegehäuses 7 drückt und die angesammelten Partikel und durch Schmutz zugesetzten Filterscheibenporen säubert.

Über das offene Wasserablaufventil 27 werden die Mikroplastikpartikel im Wasserstrom aus dem System gespült, um außerhalb über eine 5µm Folie eingesammelt und entsorgt werden zu können.

Bei einem Wasserrückstau während des offenen Wasserablassventils 27 oder bei dem manuell nicht geöffnetem Wasserablassventil 27 kann das Wasser über das Zu- bzw. Ablaufrohr 13 und über den Wasserablaufgewindestutzen 4 in die Hauswasserhauptleitung zurückfließen.

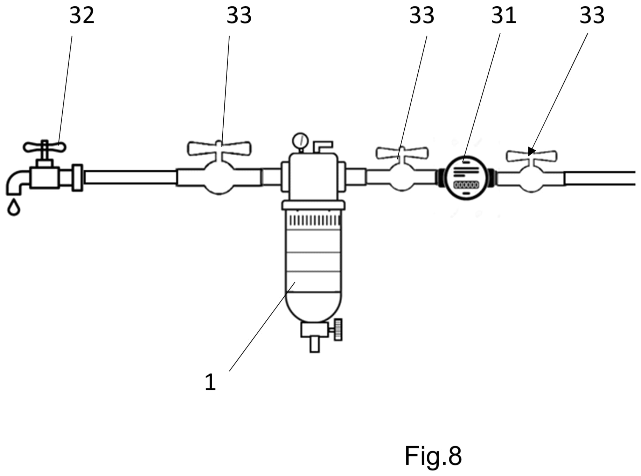

Figur 8 zeigt eine Ansicht der Hauswasserleitung von dem Wasserzähler 30 bis zur Wasserentnahmearmatur 32 über die Absperrventile 33 sowie den integrierten erfindungsgemäßen Trinkwasser-Mikroplastikfilter 1.1.

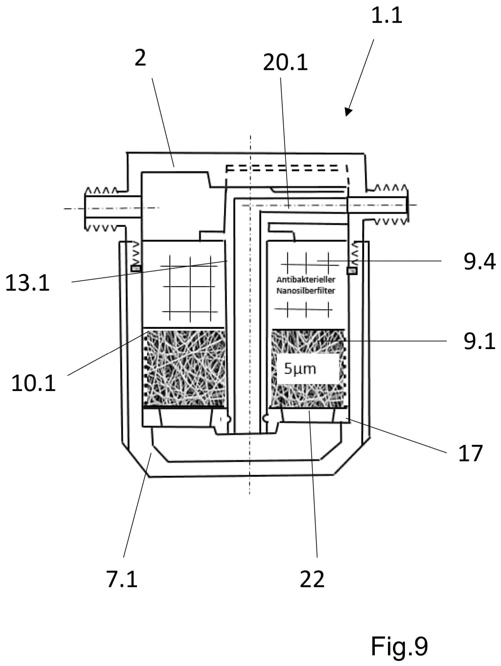

Figur 9 zeigt einen Querschnitt durch ein Ausführungsbeispiel des erfindungsgemäßen Trinkwasser-Mikroplastikfilters 1, jedoch in reduzierter Bauweise, das bedeutet nur mit zwei Filterscheiben 9.1 und 9.4 bestückt.

Der Systemaufbau dieser Ausführung basiert auf der Basisidee mit dem Kopfgehäuse 2 und dem im Aufbau kleineren Filteraufnahmegehäuse 7.1.

Das auswechselbare Filtermodul 10.1 hat ebenfalls wie die Basisidee, dargestellt in der Figur 1, ein zentrales winkliges Zu- und Ablaufrohr 13.1 mit einem Zulauf 18.1.

Die auf dem Zu- und Ablaufrohr 13.1 aufgefädelten zwei Filterscheiben 9.1 und 9.4 werden im unteren Rohrbereich mit dem Filteraufnahmekorb 16 fixiert, verankert und gegen eine Längsverschiebung mit einem Anschlag 11 in Position gehalten.

Dieses Ausführungsbeispiel eignet sich für den Einbau direkt hinter der Wasserentnahmestelle, wenn zum Beispiel nur an einer Wasserarmatur 32 Mikroplastik aus dem Trinkwasser gefiltert werden soll.

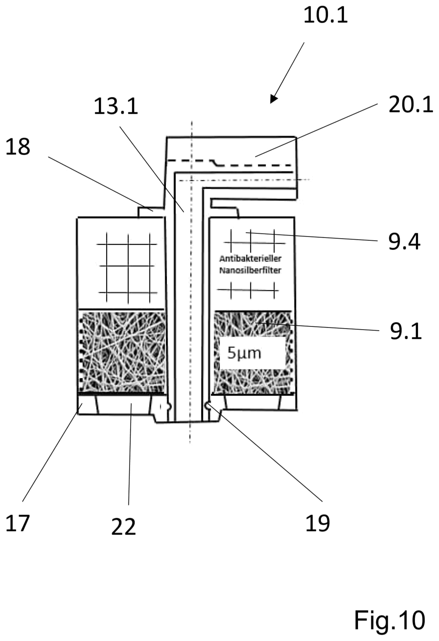

Figur 10 zeigt einen Querschnitt durch das kompakte Filtermodul 10.1 des erfindungsgemäßen Trinkwasser-Mikroplastikfilters 1.1.

Auf dem zentralen winkeligen Zu- bzw. Ablaufrohr 13.1 sind die Filterscheiben 9.1 und 9.4 aufgefädelt und durch den im unteren Rohrbereich angeordneten Scheibenaufnahmekorb 17 mit den Wasserdurchbrüchen 22 gegen die gegenüberliegende integrierte Anschlagscheibe 18 fixiert sowie gegen eine Längsverschiebung gesichert.

Durch das unlösbare Verankern des Scheibenaufnahmekorbes 17 mit dem Zu- und Ablaufrohr 13.1 über eine innenliegende Schnappverbindung 19 wird ein kompaktes Filtermodul und eine Einheit geschaffen, um ein optimales und benutzerfreundliches Auswechseln der zugesetzten Filterscheiben zu gewährleisten sowie ein einfaches Handling für das Filtermodul zu erreichen.

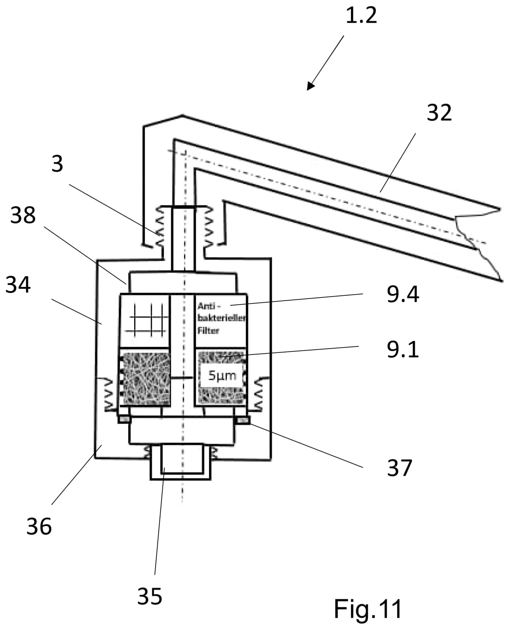

Figur 11 zeigt einen Querschnitt durch den kompakten erfindungsgemäßen Trinkwasser-Mikroplastikfilter 1.2, ausgebildet als Aufschraubfiltereinheit und direkt über das Perlatorgewinde mit der Wasserentnahmearmatur 32 verbunden.

Auch diese Filtereinheit basiert auf der Basisidee: gewickelte Filterscheiben, hintereinander über die Planflächen nach Porendurchmesser aufgereiht, um den zu filternden Wasserstrom über die Planflächen durch die Filterscheiben 9.1 und 9.4 strömen zu lassen.

Bei dieser Ausführung sitzt zentral auf der oberen Deckfläche des Kopfgehäuses klein 38 das Wasserzulauf- und Verbindungsgewinde 3, welches den Wasserstrom direkt auf die Planfläche der Filterscheiben 9.4 lenkt, um durch die Filterscheiben 9.4 und 9.1 zu strömen und anschließend über den Perlator 35 aus dem Filtersystem entnommen werden zu können.

Das Aufnahmegehäuse klein 36 verschließt über eine Dichtung 37 und Schraubgewinde das System.

Bei zugesetzten Filterscheiben 9.1, 9.3, 9.4 wird das komplette Filtermodul 10 gewechselt.

### Bezugszeichenliste

| | |
|---|---|
| 1 | Trinkwasser-Mikroplastikfilter |
| 2 | Kopfgehäuse |
| 3 | Zulauf- Gewindestutzen |
| 4 | Ablauf-Gewindestutzen |
| 5 | Adaptionsgewinde |
| 6 | Verschraubdichtung |
| 7 | Aufnahmegehäuse |
| 8 | Druckmanometer |
| 9 | Filterscheiben |
| 10 | Filtermodul |
| 11 | unterer Anschlag |
| 12 | Ab-bzw. Aufschraubhilfe |
| 13 | Zu- und Ablaufrohr |
| 14 | Lochung |
| 15 | Rohröffnung |
| 16 | Planfläche |
| 17 | Scheibenaufnahmekorb |
| 18 | oberer Anschlag |
| 19 | Schnappverbindung |
| 20 | Zulaufstutzen |
| 21 | Rippe |
| 22 | Wasserdurchlässe |
| 23 | Wickelstruktur |
| 24 | Dorndurchmesser |
| 25 | Porendurchlässe |
| 26 | Rundschnur |
| 27 | Wasserablassventil |
| 28 | Drehschieber |
| 29 | Mitnahmegeometrie |
| 30 | Stirnfläche |
| 31 | Wasserzähler |
| 32 | Wasserentnahmearmatur |
| 33 | Absperrventil |
| 34 | Wandlung |
| 35 | Perlator |
| 36 | Aufnahmegehäuse klein |
| 37 | Dichtung |
| 38 | Kopfgehäuse klein |
| 39 | innere Filterscheibenstirnseiten |
| 40 | |

## Patentansprüche

1. Trinkwasserfilter mit einem Trinkwasser-Mikroplastikfilter (1, 1.1, 1.2) und einem Gehäuse, wobei das Gehäuse aus einem Kopfgehäuse (2) und einem Aufnahmegehäuse (7) besteht, wobei das Kopfgehäuse (2) einen Zulauf-Gewindestutzen (3) aufweist und einen Ablauf-Gewindestutzen (4) ausbildet, wobei der Zulauf-Gewindestutzen (3) ein winkliges Zu- und Ablaufrohr (13) aufweist, wobei ein Zulaufstutzen (18) des Zu- und Ablaufrohrs (13) sich einends zu dem Zulauf-Gewindestutzen (3) erstreckt und andernends abgewinkelt zu dem Zulaufstutzen (18) ein Rohrkörper vorhanden ist, wobei der Rohrkörper auf dem vom Zulauf-Gewindestutzen (3) abgewandten Ende eine Lochung (14) im Endbereich aufweist und in eine abschliessende Rohröffnung (15) aufweist,
**dadurch gekennzeichnet, dass**
in dem Aufnahmegehäuse (7) ein Filtermodul (10) angeordnet ist, wobei das Filtermodul (10) aus mindestens zwei Filterscheiben (9.1, 9.2, 9.3) besteht, wobei die Filterscheiben (9.1, 9.2, 9.3, 9.5) aus einer gewickelten Polypropylenrundschnur (26) bestehen, wobei das Filtermodul (10) die Wasserfilterung über Planflächen (16) der Filterscheiben (9.1, 9.2, 9.3) und über innere Stirnfläche (39) der Filterscheiben (9.1, 9.2, 9.3), die zu dem Rohrkörper hin angeordnet sind, erfolgt, wobei die Wasserfilterung von einends an dem Filtermodul (10) in einem Bereich eines Anschlags (11) befindlichen Wasserdurchbrüchen (22) zu dem andernends des Filtermoduls (10) befindlichen Zulaufstutzen (18) geführt ist.

2. Trinkwasserfilter nach Anspruch 1, **dadurch gekennzeichnet, dass** die erste Filterscheibe (9.3) einen ersten Filtrationsgrad für Poren von 5µm aufweist und eine zweite Filterscheibe (9.1, 9.2, 9.5) einen zweiten Filtrationsgrad von ≤ 5µm aufweist.

3. Trinkwasserfilter nach Anspruch 2, **dadurch gekennzeichnet, dass** die zweite Filterscheibe in dem Filtermodul (10) einerseits zu dem Kopfgehäuse (2) hin angeordnet ist, und die erste Filterscheibe andererseits weg von dem Kopfgehäuse angeordnet ist.

4. Trinkwasserfilter nach einem der vorigen Ansprüche, **dadurch gekennzeichnet, dass** das Filtermodul (10) austauschbar in dem Aufnahmegehäuse (7) angeordnet ist.

5. Trinkwasserfilter nach einem der vorigen Ansprüche, **dadurch gekennzeichnet, dass** zwischen den Filterscheiben (9.1, 9.2, 9.3) und dem Ablaufgewindestutzen (4) eine antibakterielle Nanosilber-Filterscheibe 9.4 angeordnet ist.

6. Trinkwasserfilter nach einem der vorigen Ansprüche, **dadurch gekennzeichnet, dass** das Aufnahmegehäuse (7) andernends des Kopfgehäuse (2) ein Wasserablassventil (27) aufweist, geeignet die Filterscheiben (9.1, 9.2, 9.3) rückzuspülen, wobei das Kopfgehäuse (2) einen Drehschieber 28 aufweist, welcher in Wirkverbindung mit dem Wasserablaufventil (27) steht.

7. Trinkwasserfilter nach einem der vorigen Ansprüche, **dadurch gekennzeichnet, dass** der Rohrkörper auf dem vom Zulauf-Gewindestutzen (3) abgewandten Ende die Lochung (14) über 10 bis 15% der Gesamtlänge des Rohrkörpers aufweist.

8. Trinkwasserfilter nach einem der vorigen Ansprüche, **dadurch gekennzeichnet, dass** die erste Filterscheibe (9.3) einen ersten Filtrationsgrad für Poren von 5µm aufweist und eine zweite Filterscheibe (9.5) einen zweiten Filtrationsgrad von 10µm aufweist und eine dritte Filterscheibe (9.2) einen dritten Filtrationsgrad von 25µm aufweist und eine weitere Filterscheibe (9.1) einen weiteren Filtrationsgrad von 50 µm aufweist.

9. Trinkwasserfilter nach Anspruch 8, **dadurch gekennzeichnet, dass** die weitere Filterscheibe (9.1) an dem Anschlag (11)angeordnet ist, wobei übrigen Filterescheiben (9.2, 9.3, 9.5) mit abnehmendem Filtrationsgrad zu dem Zulaufstutzen (18) gestapelt sind.
